# EUROPÄISCHE PATENTSCHRIFT

(11) **EP 3 016 759 B1**
(45) Veröffentlichungstag und Bekanntmachung des Hinweises auf die Patenterteilung: **07.06.2017**
(21) Anmeldenummer: 15717875.7
(22) Anmeldetag: 17.04.2015
(51) Int. Cl.: B21D 37/12, B26D 7/00, B26F 1/40, F16C 33/22

(54) **SÄULENGESTELL MIT SCHWIMMENDER LAGERUNG ZUR TAUMELAUSGLEICHBEWEGUNG**
FLOATINGLY MOUNTED COLUMN FRAME FOR WOBBLE COMPENSATION
BÂTI À COLONNES À SUSPENSION FLOTTANTE, POUR AMORTISSEMENT DE VACILLEMENT

(30) Priorität: 22.04.2014 DE 102014105644
(43) Veröffentlichungstag der Anmeldung: 11.05.2016
(73) Patentinhaber: Fibro GmbH, 74855 Hassmersheim (DE)
(72) Erfinder: SCHRECK, Georg, 74855 Hassmersheim (DE)
(74) Vertreter: Wendels, Stefan
(86) Internationale Anmeldenummer: PCT/EP2015/058456
(87) Internationale Veröffentlichungsnummer: WO 2015/162073

(56) Entgegenhaltungen:
- CN-Y- 201 271 705
- DE-A1- 2 441 000
- DE-U- 7 306 363
- FR-A1- 2 335 726

## Beschreibung

Die Erfindung betrifft ein Säulengestell, für Werkzeuge der Stanz- und Umformtechnik, gemäß dem Oberbegriff des Anspruchs 1. Solch ein Säulengestell ist z.B. aus der FR-A-2335726 bekannt.

Im Stand der Technik sind Säulengestelle unterschiedlicher Ausführung bekannt. Säulengestelle werden typischerweise aus Stahl und Aluminium hergestellt. Es ist bekannt, dass Säulengestelle aus Stahl spannungsfrei geglüht und je nach Größe planparallel geschliffen oder feingefräst werden. Säulenführungsgestelle werden zum Beispiel nach DIN oder ISO und Werksnormen aus Stahl, Guss oder Aluminium mit Gleit- oder Kugelführung hergestellt. Daneben sind auch Kleinpressen, Präzisions-Werkzeugaufbauten und Werkzeug-Schnellwechsel-gestelle bekannt, die nach dem Prinzip eines Säulengestells aufgebaut sein können.

Säulengestelle für Werkzeuge der Stanz- und Umformtechnik bestehen typischerweise aus einer Kopfplatte und einer Grundplatte zwischen denen Führungssäulen zur Führung eine Führungsplatte angeordnet sind und die Führungssäulen eine Bewegungsrichtung Z für die Führungsplatte definieren. Die Führungsplatte wird üblicherweise an geeigneten Lagern an den Führungssäulen auf- und abbewegbar gelagert. Als Führungsart kommt einerseits ein Gleitlager (Gleitführung) in Betracht und andererseits eine Kugelführung.

Der Aufbau der am Markt bekannten Säulengestelle ist jedoch vielfältig. Die DE-OS 2441000 beschäftigt sich zum Beispiel mit einem Säulengestell bei dem die Führungssäulen zug- und druckfest über gesonderte Befestigungsmittel leicht lösbar mit der Stempelführungsplatte verbunden sind.

Die DE 1142148 A zeigt ein weiteres im Stand der Technik bekanntes Säulengestellt und beschäftigt sich mit einer Vorrichtung zur Schmierung der Führungssäulen und -buchsen des Säulengestells für Stanzwerkzeug. Diese Vorrichtung betrifft eine Lösung zur Schmierung der Führungssäulen und - buchsen, bei dem in die Buchsen ein schwimmender, der Hin- und Herbewegung der Säule durch den entstehenden Druck und Sog eine solche Anordnung ergibt sich eine gleichmäßige Schmiermittelverteilung und ein sparsamer Schmiermittelverbrauch.

Die Präzision von Säulengestellen und deren Qualität hängt allerdings von einer Vielzahl von Faktoren ab. Ein wesentlicher Punkt besteht in der Bereitstellung einer geeigneten Führung für die Führungsplatte. Bei Säulenführungsgestellen ist allerdings ein besonderes Augenmerk neben der eigentlichen Führung auch auf die mit dem Säulengestell verbundene Bearbeitungsaufgabe zu richten. So muss die Ausführung der Gleitführungsbuchsen nicht nur den hohen Hubzahlen und den auftretenden mechanischen Belastungen standhalten, sondern für die jeweilige Anwendung geeignete Eigenschaften aufweisen.

So gibt es Pressverfahren insbesondere im Bereich der Kunststoff- und Folienverarbeitung, bei denen eine lokale Krafteinleitung in die Führungsplatte über ein abgegrenztes d.h. partielles Oberflächensegment der Führungsplatte so erfolgt bzw. die Führungsplatte auf eine Materialerhebung zunächst so auftritt, dass dadurch Kräfte in die Führungsplatte und folglich in die Lager ungleichmäßig eingeleitet werden. So kann es ggf. auch zu einem Verklemmen der Führungsplatte kommen.

Ferner liegen manchen zu verarbeitenden Produkten solche Fertigungstoleranzen zu Grunde, die es bei der Bearbeitung mit dem Säulengestell abzufangen gilt. Auch dadurch kann es zu unerwünschten Effekten infolge der auftretenden Kräfte kommen. Nachteilig ist es immer, wenn Kräfte zwischen den Säulen des Säulengestells unsymmetrisch auftreten, insbesondere wenn gleichzeitig hohe Hubzahlen mit dem Säulengestell erzielt werden sollen.

Der Erfindung liegt deshalb die Aufgabe zugrunde, vorbesagte Nachteile zu überwinden und ein verbessertes Säulengestell bereitzustellen, bei dem die Führungsplatte auf solche mechanischen und äußeren Einwirkungen geeignet auch bei dynamischer Belastung reagieren kann.

Diese Aufgabe wird mit einem Säulengestell mit den Merkmalen des Anspruchs 1 gelöst.

Grundgedanke der vorliegenden Erfindung ist es dabei, die Führungsplatte zwischen der Grundplatte und Kopfplatte schwimmend zu lagern. Dies wird erfindungsgemäß dadurch bewerkstelligt, dass die Führungseinheiten der Führungsplatte elastisch und nicht starr gelagert sind, wodurch diese eine Taumelausgleichbewegung möglich machen. Dadurch, dass die Führungsplatte vorzugsweise an allen Führungseinheiten mit einem elastischen Lager an den Führungssäulen gehalten und geführt wird, kann die Führungsplatte bei einer außerzentrischen Krafteinleitung eine schwimmende Ausgleichbewegung vollführen. Der Grad bzw. das Maß der schwimmenden Bewegung ist unter anderem abhängig von der Elastizität des Lagers und dem Lagerspiel, welches bestimmungsgemäß vorgesehen wird. Die Ausgleichbewegung infolge der schwimmenden Lagerung lässt sich auch als eine Taumelbewegung um eine Achse parallel zur Betätigungsrichtung der Führungsplatte beschreiben.

Erfindungsgemäß wird demnach ein Säulengestell für Werkzeuge der Stanz- und Umformtechnik bereitgestellt, bestehend aus einer Kopfplatte und einer Grundplatte zwischen denen vorzugsweise vier Führungssäulen zur Führung eine Führungsplatte angeordnet sind und die Führungssäulen eine Bewegungsrichtung Z für die Führungsplatte definieren, wobei die Führungsplatte an führungsplattenseitigen Führungseinheiten an den Führungssäulen elastisch gelagert ist, derart dass die Führungsplatte eine Taumelbewegung um eine Achse parallel zur Z-Richtung ausführen kann.

In einer bevorzugten Ausführungsform der Erfindung weist das Säulengestell jeweils je Führungssäule eine Führungseinheit auf, die in je einer Lageröffnung der Führungsplatte an je einer elastischen Lagerbuchse gelagert ist. Mit Vorteil sind zylinderförmige Öffnungen in der Führungsplatte benachbart an den Ecken derselben eingebracht und ist in diese je eine Führungseinheit eingesetzt.

Mit Vorteil ist es vorgesehen, wenn die Führungseinheiten wenigstens eine aus einem elastischen Material ausgebildete elastische Lagerbuchse aufweisen.

In einer besonders vorteilhaften und günstigen Ausführungsform der Erfindung ist das elastische Material ein elastisches Kunststoffmaterial, ein Elastomer, ein natürlicher Kautschuk oder ein elastisch verformbares Gummimaterial. Bevorzugt ist es, wenn die gesamte Lagerbuchse aus diesem Material gebildet ist. In einer alternativen Ausführungsform der Erfindung können aber auch mehrere unterschiedliche elastische und/oder nichtelastische Materialen in einem Verbund verwendet werden. So kann zum Beispiel ein zylindrisches Lager aus einem weichen inneren elastischen Material und einen diesen Lagerring umgebenden, härteren elastischen Material ausgebildet sein. Weiter alternativ könnte dazwischen ein metallischer Stützring angeordnet werden.

Erfindungswesentlich ist allerdings, dass das Lager als solches, als ein elastisch verformbares Lager ausgebildet ist.

In einer weiter bevorzugten Ausführungsform der Erfindung weist das elastische Material eine Shorehärte von 50 bis 90, besonders bevorzugt eine Shorehärte von 70 Shore auf. Durch die Verwendung eines Materials mit dieser Shorehärte, wurde erfindungsgemäß erkannt, dass sich die Materialeigenschaft in einem besonders guten Verhältnis ausreichender Elastizität bei gleichzeitig ausreichender Härte und Lagerstabilität nutzen lassen

Es ist ferner von Vorteil, wenn die Konstruktion der Führungseinheit so ausgeführt ist, dass die Führungseinheit neben der elastischen Lagerbuchse je eine die Führungssäule umschließende Gleit- oder Kugelführung aufweist, die entlang der Führungssäule auf- und abbewegbar ist.

Weiter vorteilhaft ist es, wenn die Lagerbuchse um die Führungsbuchse herum an dieser befestigt ist, vorzugsweise auf die Führungsbuchse am Außenmantel aufgepresst und/oder aufgeklebt ist.

In einer besonders vorteilhaften Ausbildung der Erfindung weisen die Führungseinheiten je eine Führungsbuchse mit je zwei Lagerabschnitte mit einem Durchmesser D1 auf und einen zwischen den Lagerabschnitten befindlicher Befestigungsabschnitt mit einem verbreitertem Außendurchmesser D2 zur Befestigung der Lagerbuchse. Auf diese Weise wird am Übergang zwischen den Lagerabschnitten und dem Befestigungsabschnitt je einer umlaufenden Stufe bzw. ein Absatz im Außenmantel der Führungsbuchse gebildet. Mit Vorteil ist die Lagerbuchse um diesen mit größerem Außendurchmesser versehenen Befestigungsabschnitt herum befestigt.

Zur Befestigung der Führungseinheiten ist erfindungsgemäß vorgesehen, dass diese zwischen je einer oberen und unteren, die Lageröffnung zumindest teilweise abdeckenden Sicherungsscheibe an der Führungsplatte beweglich gehalten werden. Anders ausgedrückt bedeutet dies, dass die Führungseinheit mit ihrem elastischen, am Außenmantel der Führungsbuchse angebrachten elastischen Lager zwischen den beiden Sicherungsscheiben gehalten wird und sich elastisch bewegen kann und zwar derart, dass eine Taumelbewegung der Führungseinheit relativ zur Führungsplatte (bzw. der durch die Lageröffnung der Führungsplatte gedachte Mittelachse) möglich ist.

Es ist weiter mit Vorteil vorgesehen, dass zwischen der Führungseinheit bzw. deren Außenmantel und der jeweiligen Sicherungsscheibe ein axialer Spalt vorgesehen ist, dessen Spaltbreite ein axiales Lagerspiel für eine mögliche Taumelbewegung der Führungseinheit definiert bzw. begrenzt.

In einer weiter bevorzugten Ausführungsform der Erfindung ist zwischen der jeweiligen Sicherungsscheibe und der elastischen Lagerbuchse je ein Spalt bestimmungsgemäß vorgesehen ist, dessen Spaltbreite einen Längenausgleich für die Lagerbuchse (nach oben und unten) darstellt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig.1: ein Säulengestell gemäß einer Ausführungsform der Erfindung in einer Seitenansicht und einer Schnittansicht;
- Fig.2: ein Ausführungsbeispiel einer Führungseinheit;
- Fig.3: ein Ausführungsbeispiel einer Sicherungsscheibe für die Führungseinheit aus Figur 2;
- Fig.4: eine Schnittansicht mit einer Detailansicht der Schnittansicht durch die Führungseinheiten der Führungsplatte des Säulengestells gemäß Figur 1.

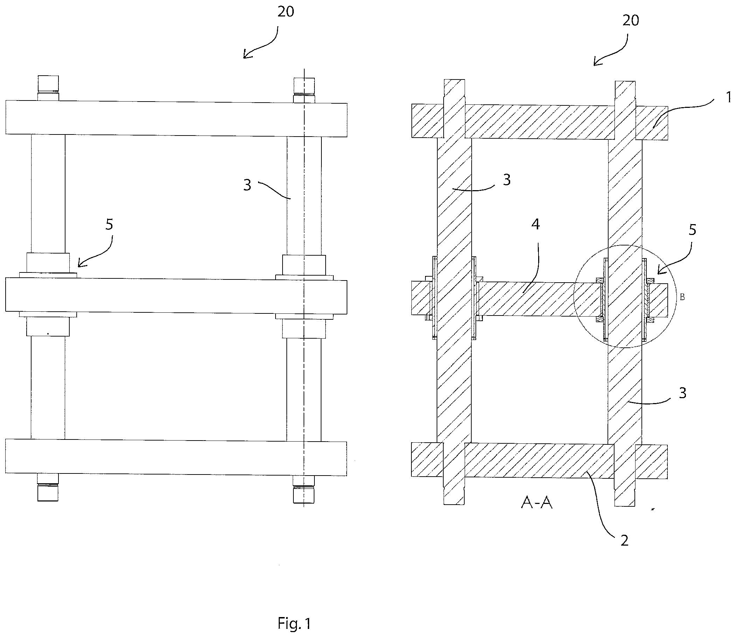

In der Figur 1 ist ein Säulengestell 20 gemäß einer beispielhaften Ausführunsform der Erfindung in einer Seitenansicht und einer Schnittansicht dargestellt. Das Säulengestell 20 besteht aus einer Kopfplatte 1 und einer Grundplatte 2 zwischen denen vier Führungssäulen 3 zur Führung einer Führungsplatte 4 angeordnet sind. Die Führungssäulen 3 definieren eine Bewegungsrichtung Z für die Führungsplatte 4, wobei die Führungsplatte 4 an führungsplattenseitigen Führungseinheiten 5 (die später in der Beschreibung zur Figur 5 näher erläutert werden) an den Führungssäulen 3 elastisch gelagert ist, derart dass die Führungsplatte 4 eine Taumelbewegung um eine (vorzugsweise zentrale) Achse parallel zur Z-Richtung ausführen kann. Dies bedeutet, dass die durch die Unterseite 4a und die Oberseite 4b aufgespannten Ebenen der Führungsplatte 4 (bzw. die Führungsplatte 4 als solche) bestimmungsgemäß eine Kipp- und Taumelbewegung in eine Ebenenposition außerhalb einer Parallelebene ausführen kann. Der Grad des Kippwinkels hängt dabei von der Wahl verschiedener Faktoren der Führungseinheiten 5 ab, wie z.B. Elastizitätsmodul, radiale Spaltbildung und axiale Spaltbildung, Höhe der Einheiten, e.t.c.).

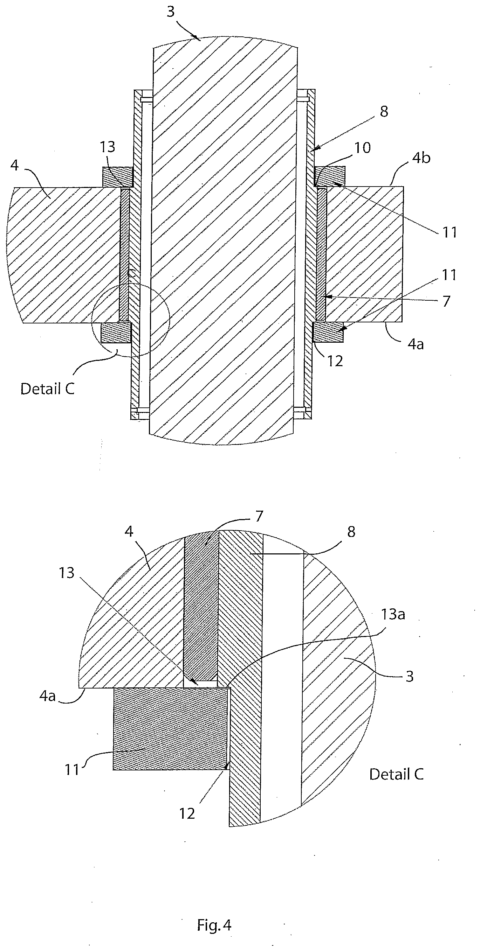

Wie in den Figuren 1 und 4 zu entnehmen ist, sind die vier Führungseinheiten 5 in je einer Lageröffnung 6 der Führungsplatte 4 an je einer elastischen Lagerbuchse 7 gelagert. Die Lageröffnungen 6 sind als zylinderförmige Öffnungen in Eckabschnitten der Führungsplatte 4 eingebracht.

Die Führungseinheiten 5 weisen eine aus einem elastischen Material ausgebildete elastische Lagerbuchse 7 auf, welche notwendig ist, dass die Führungsplatte 4 die oben angegebene Taumelbewegung ausführen kann und folglich eine schwimmende Lagerung erhalten wird. Das elastische Material stellt zum Beispiel ein elastisches Kunststoffmaterial, ein Elastomer, ein natürlicher Kautschuk oder ein elastisch verformbares Gummimaterial dar. Geeignete elastische Materialien sind solche Materialien, die elastisch komprimierbar sind, so dass beim Ausführen einer Taumelbewegung um einen Kippwinkel α die elastische Lagerbuchse 7 in Wandstärkenrichtung komprimiert werden kann und sich selbstständig wieder in seine Ursprungslage elastisch zurückformen kann. Mit Vorteil wird ein elastisches Material verwendet, welches eine Shorehärte von 50 bis 90, besonders bevorzugt von 70 Shore aufweist. Weiter bevorzugt ist es, wenn die Wandstärke der elastischen Lagerbuchse 7 in etwa zwischen 3% und 7% des Außendurchmessers der Lagerbuchse 7 beträgt und weiter bevorzugt etwa 5% des Außendurchmessers. In einer besonders bevorzugten Ausbildung der Erfindung beträgt die Höhe der Lagerbuchse zwischen 60% und 80% des Außendurchmessers der Lagerbuchse 7 und weiter bevorzugt etwa 65% des Außendurchmessers.

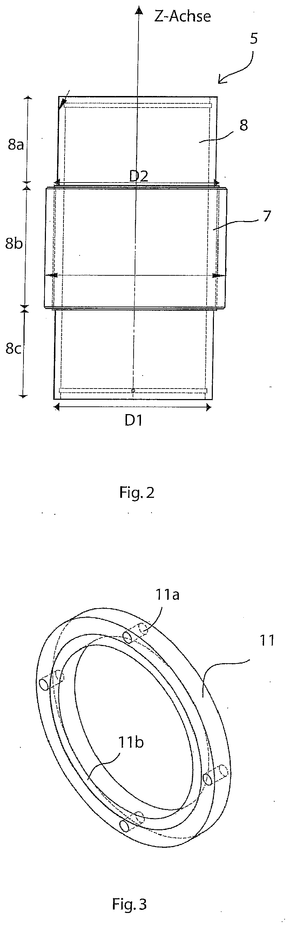

Die Führungseinheiten 5 weisen neben der elastischen Lagerbuchse 7 je eine die Führungssäule 3 umschließende Führungsbuchse 8 auf. Die Lagerbuchsen 7 sind um die Führungsbuchse 8 herum an dessen Außenmantel befestigt, vorzugsweise auf die Führungsbuchse 8 aufgepresst und/oder aufgeklebt, um die Führungseinheit gemäß Figur 2 zu erhalten.

Die Führungseinheiten sind so ausgebildet, dass die Führungsbuchsen mit je zwei Lagerabschnitte 8a, 8c mit einem Durchmesser D1 und einem dazwischen liegenden Befestigungsabschnitt 8b mit einem größeren d.h. verbreitertem Außendurchmesser D2 zur Befestigung der Lagerbuchse 7 ausgebildet sind, wodurch je einer (obere und untere) umlaufenden Stufe 10 (siehe hierzu auch Figur 4) am Übergang zwischen den Lagerabschnitten 8a, 8c und dem Befestigungsabschnitt 8b erhalten wird. Diese Stufen dienen als obere und untere Begrenzungsmittel unter Berücksichtigung der Toleranzen und unter Ausbildung eines bestimmungsgemäßen Spaltes für die in Figur 3 dargestellte Sicherungsscheibe 11 (siehe Toleranzspalt 13a), die hierzu mit einem ringförmigen Absatz 11 b ausgebildet ist. Aus Figur 5 ist die Lagerung der Führungseinheiten ersichtlich. Die Lagerbuchse 7 ist um den Befestigungsabschnitt 8b herum befestigt. Die Führungseinheiten 5 werden zwischen je einer oberen und unteren, die Lageröffnung 6 zumindest teilweise abdeckenden Sicherungsscheibe 11 an der Führungsplatte 4 beweglich gehalten und zwar an den Befestigungsöffnungen 11, die in der Sicherungsscheibe 11 angebracht sind. Zwischen dem Außenmantel der Führungseinheit 5 und dem jeweiligen dem Außenmantel zugewandten Seitenfläche der Sicherungsscheibe 11 ist ein radialer Ringspalt 12 vorgesehen. Die Spaltbreite definiert das Lagerspiel für eine mögliche Taumelbewegung der Führungseinheit 5.

Es ist ferner erkennbar, dass zwischen der jeweiligen Sicherungsscheibe 11 und der elastischen Lagerbuchse 7 ein Spalt 13 bestimmungsgemäß so vorgesehen ist, dass ein Längenausgleich für die Lagerbuchse bereitgestellt wird. Die Position der oberen und unteren Stufen 10, die als Begrenzungsmittel für die Sicherungsscheiben 11 in Z-Richtung dienen, liegen höhenmäßig in einer um den Toleranzspalt 13a versetzten Ebene wie die jeweilige Ober- bzw. Unterseite 4a, 4b der Führungsplatte 4. In dem vorliegenden Ausführungsbeispiel entspricht die Höhe des Befestigungsabschnitts 8b in etwa der Dicke der Führungsplatte 4 im Bereich der Befestigungsabschnitte für die Sicherungsscheiben 11. Da die Sicherungsscheibe auf der dem Spalt zugewandten Seite einen Absatz 11 b aufweist, ergibt sich jeweils zwischen der Stufe 10 und dem Absatz 11b ein Toleranzspalt 13b.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Säulengestell (20) für Werkzeuge der Stanz- und Umformtechnik, bestehend aus einer Kopfplatte (1) und einer Grundplatte (2) zwischen denen Führungssäulen (3) zur Führung einer Führungsplatte (4) angeordnet sind und die Führungssäulen (3) eine Bewegungsrichtung Z für die Führungsplatte (4) definieren, **dadurch gekennzeichnet dass** die Führungsplatte (4) an führungsplattenseitigen Führungseinheiten (5) an den Führungssäulen (3) elastisch gelagert ist, derart dass die Führungsplatte (4) eine Taumelbewegung um eine Achse parallel zur Z-Richtung ausführen kann.

2. Säulengestell (20) gemäß Anspruch 1, **dadurch gekennzeichnet dass** die Führungseinheiten (5) in je einer Lageröffnung (6) der Führungsplatte (4) an je einer elastischen Lagerbuchse (7) gelagert ist.

3. Säulengestell (20) gemäß Anspruch 1 oder 2, **dadurch gekennzeichnet dass** die Führungseinheiten (5) wenigstens eine aus einem elastischen Material ausgebildete elastische Lagerbuchse (7) aufweisen.

4. Säulengestell (20) gemäß Anspruch 2 oder 3, **dadurch gekennzeichnet dass** das elastische Material ein elastisch kompressibles Material ist wie z.B. ein elastisches Kunststoffmaterial, ein Elastomer, ein natürlicher Kautschuk oder ein elastisch komprimierbares Gummiverbundmaterial darstellt.

5. Säulengestell (20) gemäß einem der vorhergehenden Ansprüche 2 bis 4, **dadurch gekennzeichnet, dass** das elastische Material eine Shorehärte von 50 bis 90, besonders bevorzugt von 70 Shore aufweist.

6. Säulengestell (20) gemäß einem der vorhergehenden Ansprüche, **dadurch gekennzeichnet dass** jede Führungseinheit (5) neben einer elastischen Lagerbuchse (7) je eine die Führungssäule (3) umschließende Führungsbuchse (8) aufweist.

7. Säulengestell (20) gemäß dem Anspruch 6, **dadurch gekennzeichnet dass** die Lagerbuchse (7) um die Führungsbuchse (8) herum an dieser befestigt ist, vorzugsweise auf die Führungsbuchse (8) aufgepresst und/oder aufgeklebt ist.

8. Säulengestell (20) gemäß einem der vorhergehenden Ansprüche, **dadurch gekennzeichnet dass** die Führungseinheiten eine Führungsbuchse mit je zwei Lagerabschnitte (8a, 8c) mit einem Durchmesser D1 und einem dazwischen liegenden Befestigungsabschnitt (8b) mit einem verbreitertem Außendurchmesser D2 zur Befestigung der Lagerbuchse (7) unter Ausbildung je einer umlaufenden Stufe (10) am Übergang zwischen den Lagerabschnitten (8a, 8c) und dem Befestigungsabschnitt (8b) aufweisen.

9. Säulengestell (20) gemäß dem Anspruch 8, **dadurch gekennzeichnet dass** die Lagerbuchse (7) um den Befestigungsabschnitt (8b) herum befestigt ist.

10. Säulengestell (20) gemäß einem der vorhergehenden Ansprüche 8 oder 9, **dadurch gekennzeichnet, dass** die Führungseinheiten (5) zwischen je einer oberen und unteren, die Lageröffnung (6) zumindest teilweise abdeckenden Sicherungsscheibe (11) an der Führungsplatte (4) beweglich gehalten werden.

11. Säulengestell (20) gemäß dem Anspruch 10, **dadurch gekennzeichnet dass** zwischen der Führungseinheit (5) und der jeweiligen Sicherungsscheibe (11) ein radialer Ringspalt (12) vorgesehen ist, dessen Spaltbreite ein axiales Lagerspiel für eine mögliche Taumelbewegung der Führungseinheit (5) definiert.

12. Säulengestell (20) gemäß dem Anspruch 10, **dadurch gekennzeichnet dass** zwischen der jeweiligen Sicherungsscheibe (11) und der elastischen Lagerbuchse (7) ein Spalt (13) bestimmungsgemäß vorgesehen ist, dessen Spaltbreite einen Längenausgleich für die Lagerbuchse darstellt.

## Claims

1. A column frame (20) for tools of stamping- and forming technology, consisting of a head plate (1) and a base plate (2) between which guide columns (3) for guiding a guide plate (4) are arranged and the guide columns (3) define a direction of movement Z for the guide plate (4), **characterized in that** the guide plate (4) is elastically supported on guide plate-side guide units (5) on the guide columns (3) in such a manner that the guide plate (4) can execute a wobbling movement about an axis parallel to the Z direction.

2. Column frame (20) according to Claim 1, **characterized in that** the guide units (5) are supported in a support opening (6) of the guide plate (4) on an elastic support sleeve (7).

3. Column frame (20) according to Claim 1 or 2, **characterized in that** the guide units (5) comprise at least one elastic support sleeve (7) made of an elastic material.

4. Column frame (20) according to Claim 2 or 3, **characterized in that** the elastic material is an elastically compressible material such as, e.g. an elastic plastic material, an elastomer, a natural rubber or an elastically compressible composite rubber material.

5. Column frame (20) according to one of the previous Claims 2 to 4, **characterized in that** the elastic material has a Shore hardness of 50 to 90, especially preferably of 70 Shores.

6. Column frame (20) according to one of the previous claims, **characterized in that** each guide unit (5) comprises, in addition to an elastic support sleeve (7), a guide sleeve (8) surrounding the guide column (3).

7. Column frame (20) according to Claim 6, **characterized in that** the support sleeve (7) is fastened around the guide sleeve (8) on it, preferably pressed and/or adhered on the guide sleeve (8).

8. Column frame (20) according to one of the previous claims, **characterized in that** the guide units comprise a guide sleeve with two support sections (8a, 8c) with a diameter D1 and a fastening section (8b) with a widened outside diameter D2 between them for fastening the support sleeve (7), forming a circumferential step (10) at the transition between the support sections (8a, 8c) and the fastening section (8b).

9. Column frame (20) according to Claim 8, **characterized in that** the support sleeve (7) is fastened around the fastening section (8b).

10. Column frame (20) according to one of the previous claims 8 or 9, **characterized in that** the guide units (5) are movably held on the guide plate (4) between an upper and a lower safety disk (11) at least partially covering the support opening (6).

11. Column frame (20) according to Claim 10, **characterized in that** a radial annular slot (12) is provided between the guide unit (5) and the particular safety disk (11) whose slot width defines an axial support play for a possible wobbling movement of the guide unit (5).

12. Column frame (20) according to Claim 10, **characterized in that** a slot (13) is normally provided between the particular safety disk (11) and the elastic support sleeve (7) whose slot width constitutes a longitudinal compensation for the support sleeve.

## Revendications

1. Bâti à colonnes (20) pour des outils de la technique de poinçonnage et de formage, composé d'une plaque de tête (1) et d'une plaque de base (2) entre desquelles sont agencées des colonnes de guidage (3) pour guider une plaque de guidage (4) et les colonnes de guidage (3) définissent une direction de déplacement Z pour la plaque de guidage (4), **caractérisé en ce que** la plaque de guidage (4) est montée de manière élastique au niveau d'unités de guidage (5) situées côté plaque de guidage au niveau des colonnes de guidage (3), de telle sorte que la plaque de guidage (4) puisse réaliser un mouvement de vacillement autour d'un axe parallèlement à la direction Z.

2. Bâti à colonnes (20) selon la revendication 1, **caractérisé en ce que** les unités de guidage (5) sont logées dans respectivement une ouverture de palier (6) de la plaque de guidage (4) au niveau de respectivement un coussinet élastique (7).

3. Bâti à colonnes (20) selon la revendication 1 ou 2, **caractérisé en ce que** les unités de guidage (5) présentent au moins un coussinet élastique (7) réalisé en un matériau élastique.

4. Bâti à colonnes (20) selon la revendication 2 ou 3, **caractérisé en ce que** le matériau élastique est un matériau compressible de manière élastique, par exemple une matière plastique élastique, un élastomère, un caoutchouc naturel ou représente un caoutchouc composite compressible de manière élastique.

5. Bâti à colonnes (20) selon l'une quelconque des revendications précédentes 2 à 4, **caractérisé en ce que** le matériau élastique présente une dureté Shore de 50 à 90, de manière particulièrement préférée de 70 Shore.

6. Bâti à colonnes (20) selon l'une quelconque des revendications précédentes, **caractérisé en ce que** chaque unité de guidage (5) près d'un coussinet élastique (7) présente respectivement une douille de guidage (8) entourant la colonne de guidage (3).

7. Bâti à colonnes (20) selon la revendication 6, **caractérisé en ce que** le coussinet (7) autour de la douille de guidage (8) est fixé à celle-ci, est de préférence emmanché par pression et/ou collé sur la douille de guidage (8).

8. Bâti à colonnes (20) selon l'une quelconque des revendications précédentes, **caractérisé en ce que** les unités de guidage présentent une douille de guidage avec respectivement deux parties de palier (8a, 8c) d'un diamètre D1 et une partie de fixation (8b) située entre celles-ci avec un diamètre extérieur D2 élargi pour la fixation du coussinet (7) en formant respectivement un gradin périphérique (10) au niveau du passage entre les parties de palier (8a, 8c) et la partie de fixation (8b).

9. Bâti à colonnes (20) selon la revendication 8, **caractérisé en ce que** le coussinet (7) est fixé autour de la partie de fixation (8b).

10. Bâti à colonnes (20) selon l'une quelconque des revendications précédentes 8 ou 9, **caractérisé en ce que** les unités de guidage (5) sont maintenues de manière mobile entre respectivement une rondelle d'arrêt (11) supérieure et inférieure recouvrant au moins partiellement l'ouverture de palier (6) au niveau de la plaque de guidage (4).

11. Bâti à colonnes (20) selon la revendication 10, **caractérisé en ce que**, entre l'unité de guidage (5) et la rondelle d'arrêt (11) respective, est prévu un espace annulaire radial (12) dont la largeur de fente définit un jeu de palier axial pour un possible mouvement de vacillement de l'unité de guidage (5).

12. Bâti à colonnes (20) selon la revendication 10, **caractérisé en ce que**, entre la rondelle d'arrêt (11) respective et le coussinet élastique (7), est prévue de manière conforme à sa destination une fente (13) dont la largeur de fente représente une compensation de longueur pour le coussinet.
